# EUROPÄISCHE PATENTSCHRIFT

(11) **EP 1 593 419 B1**
(45) Veröffentlichungstag und Bekanntmachung des Hinweises auf die Patenterteilung: **12.03.2008**
(21) Anmeldenummer: 05103542.6
(22) Anmeldetag: 28.04.2005
(51) Int. Cl.: B01D 29/21

(54) **Filterelement und Flüssigkeitsfilter für einfriergefährdete Fluide sowie Verfahren zur Herstellung des Filterelementes**
Filter element and liquid filter for fluids which may freeze and method for manufacturing said filter element
Elément filtrant et filtre à liquide pour fluides susceptibles de geler et méthode de fabrication dudit élément filtrant

(30) Priorität: 05.05.2004 DE 102004025811
(43) Veröffentlichungstag der Anmeldung: 09.11.2005
(73) Patentinhaber: MANN+HUMMEL GmbH, 71638 Ludwigsburg (DE)
(72) Erfinder: Kramer, Jörg, 72379 Hechingen (DE)

(56) Entgegenhaltungen:
- DE-A1- 10 220 662

## Beschreibung

### Stand der Technik

Die Erfindung betrifft ein Filterelement gemäß dem Patentanspruch 1 sowie einen Flüssigkeitsfilter gemäß dem Patentanspruch 8. Außerdem betrifft die Erfindung ein Verfahren zur Herstellung des Filterelementes gemäß Anspruch 9.

Es ist aus der DE 102 20 662 ein Flüssigkeitsfilter für einfriergefährdete Fluide bekannt. Der Flüssigkeitsfilter verfügt über ein Gehäuse, welches mit einem Filterdeckel verschließbar ist. In dem Gehäuse ist ein Filterelement angeordnet, welches über ein Filtermedium und Endscheiben verfügt. Die Endscheiben sind mit jeweils einer Klebefolie an dem Filtermedium fixiert. Weiterhin sind die Endscheiben über ein Füllstück miteinander verbunden. Das Füllstück ist hierzu an eine erste Endscheibe angeformt. An der, der Endscheibe entgegen angeordneten Stirnseite verfügt das Füllstück über einen Verzahnungsbereich. Der Verzahnungsbereich greift in einen, an der zweiten Endscheibe angeordneten Bereich ein. Durch die ineinander greifenden Bereiche können Torsionskräfte von einer Endscheibe auf die andere Endscheibe übertragen werden. Bei der Demontage des Filterelementes wird die Entnahmekraft von der ersten Endscheibe auf die zweite Endscheibe über das Filtermedium übertragen. Hierbei kann das Filtermedium reißen, wodurch die untere Endscheibe nicht aus dem Gehäuse gezogen wird. Dadurch ist ein zusätzlicher Montageaufwand erforderlich, um die untere Endscheibe aus dem Gehäuse zu ziehen.

Aufgabe der Erfindung ist es, ein Filterelement, sowie einen Flüssigkeitsfilter zu schaffen, bei welchem der Filterelementwechsel einfach und schnell durchführbar ist. Außerdem ist ein Verfahren zur Herstellung des erfindungsgemäßen Filterelementes zu schaffen, mit welchem der Filtereinsatz einfach und kostengünstig herstellbar ist. Diese Aufgabe wird durch die Merkmale des Anspruches 1, 8 und 9 gelöst.

### Vorteile der Erfindung

Das erfindungsgemäße Filterelement dient der Reinigung eines einfriergefährdeten Fluids, welches sich beim Gefrieren zumindest zeitweise ausdehnt. Ein derartiges Fluid ist z.B. eine Harnstoff-Wasser-Lösung, wie sie zur Abgasbehandlung in einem Kraftfahrzeug verwendet wird. Einfriergefährdete Fluide sind Flüssigkeiten, wie z.B. Wasser, welche über einen Gefrierpunkt verfügen, der durch die Umgebungstemperaturen unterschritten werden kann. Manche Flüssigkeiten verfügen über die Eigenschaft, dass sie sich beim Übergang von einem flüssigen zu einem festen Aggregatzustand ausdehnen und somit zumindest zeitweise ein größeres Volumen einnehmen als im flüssigen Zustand. Durch diese Ausdehnung können mit der Flüssigkeit gefüllte Bauteile beschädigt werden. Das Filterelement verfügt zumindest über eine erste Endscheibe und eine zweite Endscheibe, wobei zwischen den Endscheiben ein Filtermedium dichtend angeordnet ist. Das Filtermedium ist ein zur Abscheidung von Verunreinigungen aus dem zu reinigenden Fluid geeignetes Papier oder Vlies. Selbstverständlich können alle, dem Fachmann bekannten Filtermedien, welche zur Reinigung des Fluidstromes geeignet sind, verwendet werden. Das Filtermedium ist ringförmig, insbesondere kreisringförmig, geschlossen. Unter ringförmig geschlossenen Filtermedien sind z. B. auch oval oder eckig geschlossene Filtermedien zu verstehen, bei welchen die Enden mit den Anfängen verbunden sind. Das Filtermedium begrenzt somit einen Ringraum, in welchem ein Stützelement angeordnet ist. Das Stützelement ist geringfügig kleiner als der Ringraum, wodurch zwischen dem Filtermedium und dem Stützelement ein Spalt vorhanden ist. Das Stützelement ist für das zu reinigende Fluid größtenteils undurchlässig, wodurch das durch das Stützelement eingenommene Volumen nicht durch das Fluid ausgefüllt werden kann. Die geringe Menge des Fluids kann sich nicht so stark ausdehnen, wodurch eine Beschädigung der Filterteile verhindert wird. Das Stützelement ist mit der zweiten Endscheibe fest verbunden, wodurch Relativbewegungen zwischen der zweiten Endscheibe und dem Stützelement verhindert werden. Das Stützelement verfügt über eine Verdrehsicherung, welche in einen Aufnahmebereich an der ersten Endscheibe eingreift. Durch die Verdrehsicherung werden Torsionskräfte von der ersten Endscheibe direkt über das Stützelement auf die zweite Endscheibe übertragen, ohne dass das Filtermedium der Torsionskraft ausgesetzt ist. Weiterhin verfügt das Stützelement über eine Axialsicherung, welche in Wirkverbindung mit der ersten Endscheibe verbunden ist. Die Axialsicherung ist eine Verbindung zwischen der ersten Endscheibe und dem Stützelement, durch welche axiale Kräfte von der ersten Endscheibe auf die zweite Endscheibe übertragen werden. Derartige axiale Kräfte treten z.B. beim Filterelementwechsel auf, wenn das Filterelement aus einem Gehäuse entnommen wird. Wenn das Filterelement dem zu reinigenden Fluid ausgesetzt ist, kann es zu Stabilitätsverlusten des Filtermediums kommen. Wenn auf ein instabiles Filtermedium axiale Kräfte wirken, kann dies zum Reißen des Filtermediums führen, wodurch ein Teil des Filtermediums an der ersten Endscheibe und der Rest des Filtermediums an der zweiten Endscheibe verbleibt. Durch die Axialsicherung wird auch bei einem beschädigten Filtermedium die Kraft von der ersten Endscheibe auf die zweite Endscheibe übertragen, wodurch ein sicheres Entfernen des vollständigen Filterelementes aus dem Gehäuse sichergestellt ist. Die Axialsicherung kann derart ausgeführt sein, dass die erste Endscheibe spielfrei zu dem Stützelement angeordnet ist, wodurch axiale Bewegungen der ersten Endscheibe zu direkten Bewegungen der zweiten Endscheibe führen. Bei anderen Ausgestaltungen kann die erste Endscheibe axiale Relativbewegungen zu dem Stützelement ausführen, ohne dass die zweite Endscheibe direkt mitbewegt wird. Bei diesen Ausführungen werden zunächst die axialen Bewegungen der ersten Endscheibe über das Filtermedium übertragen. Falls das Filtermedium keine axialen Kräfte übertragen kann, weil es beschädigt oder instabil ist, bewegt die Axialsicherung die zweite Endscheibe, wenn ein definierter axialer Weg zurückgelegt ist.

Gemäß einer vorteilhaften Ausgestaltung der Erfindung ist die Axialsicherung eine Schnappverbindung, mit welcher das Stützelement und die ersten Endscheibe verbunden sind. Die Schnappverbindung verfügt über mindestens ein Schnappelement, welches bei der Montage federnd in die erste Endscheibe eingreift. Die Schnappverbindung ist fertigungstechnisch, insbesondere im Kunststoffspritzguss, einfach herstellbar. Bei der Montage wird die Schnappverbindung einfach in die erste Endscheibe gedrückt und verhakt sich, wodurch die Axialsicherung gebildet ist.

Bei einer Weiterbildung der Erfindung weist das Stützelement zwei, unlösbar dichtend miteinander verbundene Teile auf, wobei an einem der Teile die Axialsicherung angeordnet ist. Die unlösbare Verbindung kann z. B. durch Kleben oder Schweißen, insbesondere durch Rotationsschweißen erzeugt sein. Durch die Teilung des Stützelementes in zwei Teile, können bei der Herstellung der einzelnen Teile einfache Geometrien realisiert werden, welche durch die Verbindung miteinander die erforderliche Geometrie des Stützelementes aufweist. Dadurch sind bei Kunststoffspritzteilen einfache Werkzeuge ausreichend, wodurch die Herstellungskosten gering sind.

Bei einer besonderen Ausführungsform der Erfindung verfügt das Stützelement über einen flüssigkeitsdichten Bereich und einen flüssigkeitsdurchlässigen Bereich. Der flüssigkeitsdichte Bereich ist dichtend von dem flüssigkeitsdurchlässigen Bereich getrennt ist. Somit kann der flüssigkeitsdurchlässige Bereich die, in dem Ringraum des Filterelementes angeordnete Reinseite mit einem im Gehäuse angeordneten Auslass verbinden, so dass nur eine geringe Menge an Flüssigkeit in dem Ringraum des Filterelementes vorhanden ist. Die geringe Menge an Flüssigkeit kann sich beim Einfrieren nicht so stark ausdehnen, wodurch eine Beschädigung des Filterelements oder der, das Filterelement umgebenden Bauteile erfolgt.

Gemäß einer Weiterbildung der Erfindung ist der flüssigkeitsdurchlässige Bereich zumindest teilweise in der Verdrehsicherung angeordnet. Hierbei verfügt die Verdrehsicherung über Öffnungen und Stege, wobei die Stege die Verdrehsicherung bilden und die Öffnungen für das Fluid durchlässig sind. Bei dieser Weiterbildung sind mehrere Funktionen in einem Bauteil zusammengefasst, wodurch die übrigen Bauteile über einfachere Geometrien verfügen können und kein zusätzlicher Platz für Funktionsbauteile erforderlich ist.

Es ist vorteilhaft, wenn die erste Endscheibe über eine profilierte Umfangsfläche mit Erhebungen und Vertiefungen verfügt. Somit kann die erste Endscheibe an einer Gehäuseinnenseite abgestützt werden. Trotz der Abstützung des Filterelementes mit den Erhebungen an der Gehäuseinnenseite kann ein Volumenstrom zwischen den Vertiefungen an der ersten Endscheibe und dem Gehäuse strömen und das Filterelement gleichmäßig anströmen.

Gemäß einer vorteilhaften Ausbildung der Erfindung ist zumindest ein Teil des Stützelementes an die zweite Endscheibe angeformt. Somit kann ein Arbeitsgang zum Verbinden der zweiten Endscheibe mit dem Stützelement eingespart werden.

Der erfindungsgemäße Flüssigkeitsfilter für einfriergefährdete Fluide, insbesondere für Harnstoff-Wasser-Lösungen, weist ein Filterelement und ein Gehäuse mit einem Einlass und einem Auslass auf, wobei das Gehäuse über einen Gehäusetopf und einen Gehäusedeckel verfügt. Der Gehäusetopf verfügt über ein Innenvolumen (V), welches geringfügig größer ist als das Filterelement. Das Filterelement ist derart in das Gehäuse eingebracht, dass der Einlass dichtend von dem Auslass getrennt ist, wobei das Filterelement gemäß den oben beschriebenen Merkmalen ausgebildet ist.

Bei dem erfindungsgemäßen Verfahren zur Herstellung eines oben beschriebenen Filterelementes wird die zweite Endscheibe mit dem ringförmig geschlossenen Filtermedium dichtend verbunden. Diese Verbindung kann durch Kleben oder Schweißen, insbesondere Spiegelschweißen erzeugt werden. Anschließend wird die Verdrehsicherung des Stützelementes in der ersten Endscheibe fixiert, wodurch die Endscheiben zueinander in Position gebracht werden und sich somit nicht mehr verdrehen können. Die Axialsicherung wird zwischen dem Stützelement und der ersten Endscheibe gebildet. Anschließend wird die erste Endscheibe mit dem Filtermedium verbunden.

### Zeichnung

Weitere Einzelheiten der Erfindung werden in der Zeichnung anhand von schematischen Ausführungsbeispielen beschrieben. Hierbei zeigt
- Figur 1: ein Filterelement im Teilschnitt,
- Figur 2: einen Ausschnitt eines Stutzens,
- Figur 3: eine erste Endscheibe in perspektivischer Darstellung und
- Figur 4: einen Flüssigkeitsfilter im Schnitt.

### Beschreibung der Ausführungsbeispiele

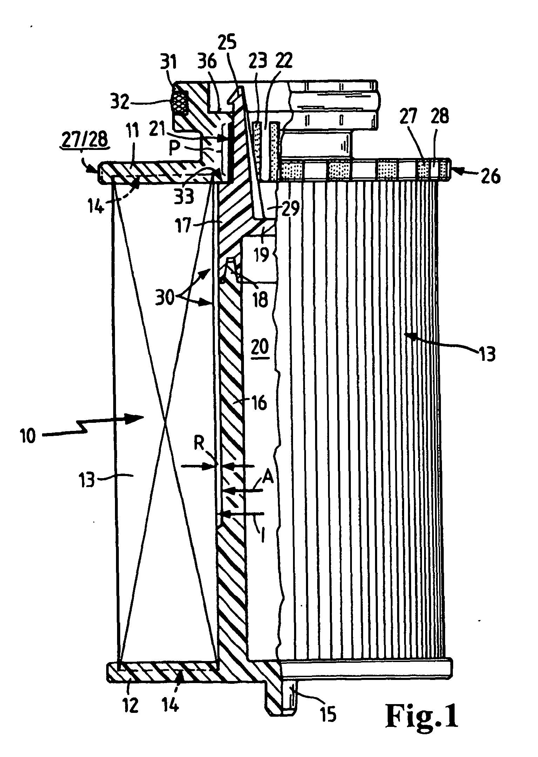

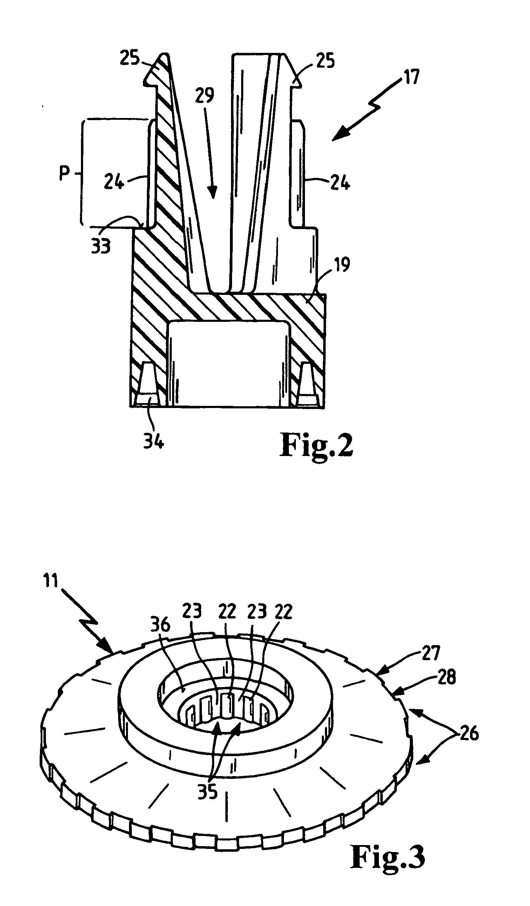

In Figur 1 ist ein Filterelement 10 im Teilschnitt dargestellt. Das Filterelement 10 verfügt über eine erste Endscheibe 11 und eine zweite Endscheibe 12, wobei die Endscheiben 11, 12 aus einem thermoplastischen Kunststoff bestehen. Zwischen den Endscheiben 11, 12 ist ein plissiertes Filtermedium 13 dichtend angeordnet. Das Filtermedium 13 ist im Spiegelschweißverfahren mit den Endscheiben 11, 12 verbunden, wodurch eine Verbindungszone 14 gebildet ist. An die zweite Endscheibe 12 ist einerseits ein Zentrierbolzen 15 und andererseits ein Rohr 16 angeformt, wobei diese Teile aus demselben Kunststoff bestehen wie die zweite Endscheibe 12. Das Rohr 16 verfügt über einen Außendurchmesser A, welcher geringfügig kleiner ist als ein von dem Filtermedium 13 gebildeter Innendurchmesser I. Das Rohr 16 ist mit einem Stutzen 17 dichtend verbunden, wobei die Verbindung im Rotationsschweißverfahren hergestellt ist. Hierzu weist das Rohr 16 eine Nase 18 auf, welche beim Verschweißen teilweise aufgeschmolzen wird. Außerdem werden auch Teile des Stutzens 17, welcher ebenfalls aus einem thermoplastischen Kunststoff besteht, aufgeschmolzen. Das Rohr 16 bildet gemeinsam mit dem Stutzen 17 ein Stützelement 30. Der Stutzen 17 verfügt im Verschweißungsbereich über den gleichen Außendurchmesser, wie das Rohr 16, so dass im verschweißten Zustand zwischen dem Rohr 16 und dem Stutzen 17 kein Absatz vorhanden ist. Der Stutzen 17 verfügt über eine Trennwand 19, welche gemeinsam mit dem Umfang des Stutzens und dem Rohr 16 ein zylindrisches Totvolumen 20 begrenzen. Das Totvolumen 20 ist dichtend von dem Flüssigkeitsdurchströmten Ringraum R zwischen dem Innendurchmesser I des Filtermediums und dem Außendurchmesser A des Rohres 16 getrennt, wodurch ein flüssigkeitsdichter Bereich in dem Stützelement 30 gebildet ist. Oberhalb der Trennwand 19 ist eine Verdrehsicherung 21 angeordnet, welche durch das Zusammenwirken der ersten Endscheibe 11 mit dem Stutzen 17 gebildet wird. Hierzu verfügt die erste Endscheibe 11 über einen Aufnahmebereich bzw. Profilbereich P, welcher aus Rippen 22 und Nuten 23 gebildet wird. In die Nuten 23 greift der Stutzen 17 mit einem entsprechend ausgestalteten Profil 24 (gemäß Figur 2) ein. Weiterhin verfügt der Stutzen 17 über drei am umfangverteilte Schnapphaken 25, welche durch den Profilbereich P in der ersten Endscheibe 11 hindurchragen und gemeinsam mit der ersten Endscheibe 11 eine Axialsicherung bilden. Innerhalb der Axialsicherung ist ein Durchgang 29 für das gereinigte Fluid angeordnet. Die erste Endscheibe 11 besitzt eine profilierte Umfangsfläche 26, welche aus Erhebungen 27 und Vertiefungen 28 besteht. Weiterhin ist an die erste Endscheibe 11 ein Dichtabsatz 31 angeformt, auf welchem ein Dichtring 32 angeordnet ist.

In Figur 2 ist ein Ausschnitt des Stutzens 17 gemäß Figur 1 dargestellt. Der Figur 1 entsprechende Bauteile sind mit gleichen Bezugszeichen versehen. Zwischen den drei, am Umfang verteilten Schnapphaken 25 sind die Durchgänge 29 für das gereinigte Fluid angeordnet. Die Durchgänge 29 erstrecken sich von den Schnapphaken 25 bis zu der Trennwand 19. Weiterhin verfügt der Stutzen 17 über eine Anlageschulter 33, an welcher die erste Endscheibe 11 gemäß Figur 1 im zusammengebauten Zustand anliegt. Auch diese Anlageschulter 33 verfügt über den Durchgang 29. Somit kann das gereinigte Fluid aus dem Inneren des Filterelementes 10 ausströmen. In dieser Darstellung ist die ringförmig umlaufende Aufnahme 34 zu erkennen, in welche die Nase 18 des Rohres 16 gemäß Figur 1 eingreift. Der Stutzen 17 bildet somit einen flüssigkeitsdurchlässigen Bereich des Stützelements 30

In Figur 3 ist die erste Endscheibe 11 in perspektivischer Darstellung gezeigt. Der Figur 1 entsprechende Bauteile sind mit gleichen Bezugszeichen versehen. An der Umfangsfläche 26 sind die Erhebungen 27 und Vertiefungen 28 angeordnet. Bei diesem Ausführungsbeispiel sind zahlreiche Erhebungen 27 und Vertiefungen 28 vorgesehen. Bei anderen Ausgestaltungen können auch weniger Erhebungen 27 bzw. Vertiefungen 28 vorgesehen sein. Hierbei kann das Größenverhältnis zwischen Erhebungen 27 und Vertiefungen 28 unterschiedlich groß sein. Je größer die, für das Fluid durchströmbare Fläche ist, desto geringer ist der Durchflusswiderstand. Da die Erhebungen 27 die Abstützung des Filterelementes 10 an einem Gehäuse (nicht dargestellt) bilden, darf die Fläche der Erhebungen nicht zu gering werden. Der Profilbereich P verfügt über ein Gegenprofil 35 zu dem Profil 24 des Stutzens 17. Bei der Montage greift das Profil 24 des Stutzens 17 in das Gegenprofil 35 der ersten Endscheibe 11 ein, welches aus Rippen 22 und Nuten 23 gebildet ist. Weiterhin ist an der ersten Endscheibe 11 ein Absatz 36 angeordnet, an welchem die Schnapphaken 25 arretiert werden, wenn Axialkräfte die erste Endscheibe 11 und den Stutzen 17 auseinander bewegen wollen.

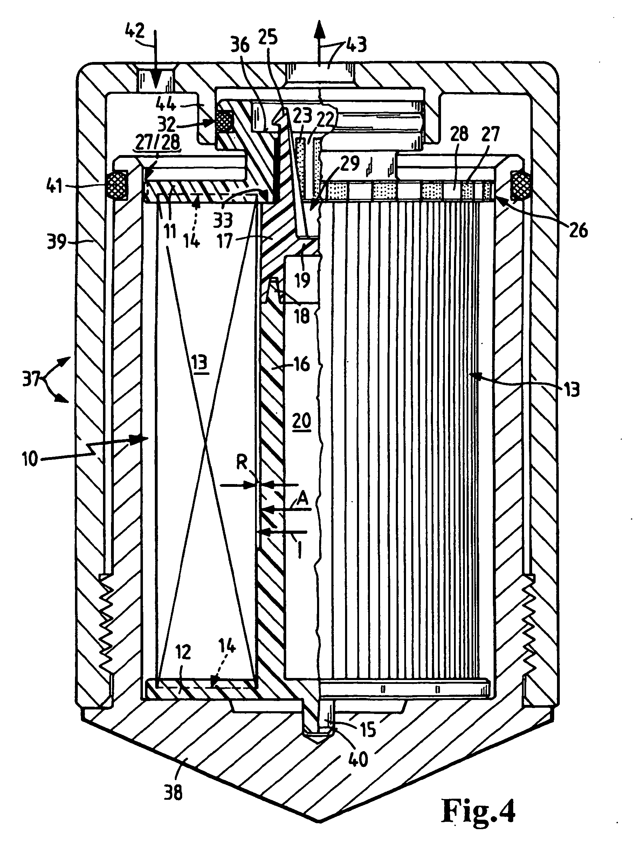

In Figur 4 ist ein Flüssigkeitsfilter im Schnitt dargestellt. Der Flüssigkeitsfilter verfügt über ein Gehäuse 37, welches aus einem Gehäusetopf 38 und einem Gehäusedeckel 39 besteht. Die Gehäuseteile 37, 38 bestehen aus Metall. In den Gehäusetopf 38 ist das Filterelement 10 gemäß Figur 1 eingebracht. Der Figur 1 entsprechende Bauteile sind mit gleichen Bezugszeichen versehen. Der Zentrierbolzen 15 greift in eine dafür vorgesehene Bohrung 40 ein und zentriert somit das Filterelement 10 über die zweite Endscheibe 12 in dem Gehäusetopf 38. Gleichzeitig wirkt der Zentrierbolzen 15 als Demontagestutzen. Die Erhebungen 27 an der ersten Endscheibe 11 stützen das Filterelement 10 ebenfalls an dem Gehäusetopf 38 ab. Der Gehäusedeckel 39 ist mit dem Gehäusetopf 38 verschraubt, wobei der Gehäusedeckel 39 die Form einer Glocke aufweist. Zwischen dem Gehäusetopf 38 und dem Gehäusedeckel 39 ist eine Dichtung 41 angeordnet, welche die Gehäuseteile 37, 38 dichtend verbindet. In dem Gehäusedeckel sind ein Einlass 42 und ein Auslass 43 angeordnet. Damit der Einlass 42 dichtend von dem Auslass 43 getrennt ist, ist ein Dichtansatz 44 an den Gehäusedeckel 39 angeformt. An dem Dichtansatz 44 liegt der Dichtring 32 an.

Das zu reinigende Fluid strömt durch den Einlass 42 in das Gehäuse 37 des Flüssigkeitsfilters ein. Zwischen der Wand des Gehäusetopfes 38 und den Vertiefungen 28 der ersten Endscheibe 11 strömt das Fluid zu dem Filtermedium 13. Durch das Filtermedium 13 werden Verunreinigungen, welche in dem Fluid enthalten sind, zurückgehalten. Das gereinigte Fluid strömt in den Ringraum R, welcher die Reinseite des Filterelements 10 bildet. Die Durchgänge 29 verbinden den Ringraum R mit dem Auslass 43, wobei das Fluid diesen Weg durchströmt, um das Gehäuse 37 zu verlassen.

## Patentansprüche

1. Filterelement (10) zur Reinigung eines einfriergefährdeten Fluids, insbesondere einer Harnstoff-Wasser-Lösung, aufweisend eine erste Endscheibe (11) und eine zweite Endscheibe (12),
- wobei zwischen den Endscheiben (11), (12) ein Filtermedium (13) dichtend angeordnet ist,
- wobei das Filtermedium (13) ringförmig geschlossen ist und einen Ringraum (R) umschließt,
- wobei in dem Ringraum (R) ein Stützelement(30) angeordnet ist, welches geringfügig kleiner ist als der Ringraum (R),
- wobei das Stützelement (30) mit der zweiten Endscheibe (12) verbunden ist und
- wobei das Stützelement (30) über eine Verdrehsicherung (21) verfügt, welche in einen Aufnahmebereich (P) an der ersten Endscheibe (11) eingreift
**dadurch gekennzeichnet, dass** das Stützelement (30) über eine Axialsicherung (25) verfügt, welche in Wirkverbindung mit der ersten Endscheibe (11) verbunden ist.

2. Filterelement (10) nach Anspruch 1, **dadurch gekennzeichnet, dass** die Axialsicherung (25) eine Schnappverbindung ist, mit welcher das Stützelement (30) und die erste Endscheibe (11) verbunden sind.

3. Filterelement (10) nach einem der vorangehenden Ansprüche, **dadurch gekennzeichnet, dass** das Stützelement (30) zwei unlösbar miteinander verbundene Teile aufweist, wobei an einem der Teile die Axialsicherung (25) angeordnet ist.

4. Filterelement (10) nach einem der vorangehenden Ansprüche, **dadurch gekennzeichnet, dass** das Stützelement (30) über einen flüssigkeitsdichten Bereich (16) und einen flüssigkeitsdurchlässigen Bereich (17) verfügt, wobei der flüssigkeitsdichte Bereich (16) dichtend von dem flüssigkeitsdurchlässigen Bereich (17) getrennt ist.

5. Filterelement (10) nach Anspruch 4, **dadurch gekennzeichnet, dass** der flüssigkeitsdurchlässige Bereich (17) zumindest teilweise in der Verdrehsicherung (21) angeordnet ist.

6. Filterelement (10) nach einem der vorangehenden Ansprüche, **dadurch gekennzeichnet, dass** die erste Endscheibe (11) über eine profilierte Umfangsfläche (26) verfügt.

7. Filterelement (10) nach einem der vorangehenden Ansprüche, **dadurch gekennzeichnet, dass** zumindest ein Teil des Stützelementes (30) an die zweite Endscheibe (12) angeformt ist.

8. Flüssigkeitsfilter für einfriergefährdete Fluide, insbesondere für Harnstoff-Wasser-Lösungen, aufweisend ein Filterelement (10) und ein Gehäuse (37) mit einem Einlass (42) und einem Auslass (43), wobei das Gehäuse (37) über einen Gehäusetopf (38) und einen Gehäusedeckel (39) verfügt, wobei der Gehäusetopf (38) über ein Innenvolumen (V) verfügt, welches geringfügig größer ist als das Filterelement (10) und das Filterelement (10) derart in das Gehäuse (37) eingebracht ist, dass der Einlass (42) dichtend von dem Auslass (43) getrennt ist, **dadurch gekennzeichnet, dass** das Filterelement (10) gemäß einem der Ansprüche 1 bis 7 ausgebildet ist.

9. Verfahren zur Herstellung eines Filterelementes gemäß Anspruch 1 bis 7, aufweisend zumindest die Arbeitsschritte
- Verbinden der zweiten Endscheibe (12) mit dem Filtermedium(13),
- Fixieren der Verdrehsicherung (21) des Stützelements (30) in der ersten Endscheibe (11),
- Verbinden der ersten Endscheibe (11) mit dem Filtermedium (13),
**dadurch gekennzeichnet, dass** die Axialsicherung (25) des Stützelementes (30) mit der ersten Endscheibe (11) verbunden wird.

## Claims

1. Filter element (10) for filtering a fluid that is in risk of freezing, more especially a urea/water solution, the said filter element comprising a first end disc (11) and a second end disc (12),
- wherein a filtering medium (13) is sealingly disposed between the end discs (110, (12),
- wherein the filtering medium (13) is closed in a ring-shaped manner and surrounds an annular chamber (R),
- wherein a support element (30) is disposed in the annular chamber (R), the said support element being slightly smaller than the annular chamber (R),
- wherein the support element (30) is connected to the second end disc (12) and
- wherein the support element (30) has an anti-rotation means (21), which engages an accommodating region (P) on the first end disc (11),
**characterised in that** the support element (30) has an axial securing means (25), which is connected in an operative manner to the first end disc (11).

2. Filter element (10) according to claim 1, **characterised in that** the axial securing means (25) is a snap-type connection, to which the support element (30) and the first end disc (11) are connected.

3. Filter element (10) according to one of the preceding claims, **characterised in that** the support element (30) includes two parts that are interconnected in a non-detachable manner, wherein the axial securing means (25) is disposed on one of the parts.

4. Filter element (10) according to one of the preceding claims, **characterised in that** the support element (30) has a liquid-tight region (16) and a liquid-permeable region (17), wherein the liquid-tight region (16) is sealingly separated from the liquid-permeable region (17).

5. Filter element (10) according to claim 4, **characterised in that** the liquid-permeable region (17) is disposed at least partially in the anti-rotation means (21).

6. Filter element (10) according to one of the preceding claims, **characterised in that** the first end disc (11) has a profiled circumferential face (26).

7. Filter element (10) according to one of the preceding claims, **characterised in that** at least one part of the support element (30) is integrally moulded onto the second end disc (12).

8. Liquid filter for fluids that are in risk of freezing , more especially urea/water solutions, the said liquid filter including a filter element (10) and a housing (37) with an inlet (42) and an outlet (43), wherein the housing (37) has a housing pot (38) and a housing cover (39), wherein the housing pot (38) has an inside volume (V), which is slightly greater than the filter element (10) and the filter element (10) is inserted into the housing (37) in such a manner that the inlet (42) is sealingly separated from the outlet (43), **characterised in that** the filter element (10) is designed according to one of claims 1 to 7.

9. Method for producing a filter element according to claim 1 to 7, the said method including at least the operating steps
- connecting the second end disc (12) to the filtering medium (13),
- securing the anti-rotation means (21) of the support element (30) in the first end disc (11),
- connecting the first end disc (11) to the filtering medium (13),
**characterised in that** the axial securing means (25) of the support element is connected to the first end disc (11).

## Revendications

1. Elément filtrant (10) pour purifier un fluide pouvant geler, en particulier une solution urée/eau, présentant un premier disque d'extrémité (11) et un deuxième disque d'extrémité (12) dans lequel
- un milieu filtrant (13) est disposé de manière hermétique entre les disques d'extrémité (11), (12),
- le milieu filtrant (13) est en forme d'anneau fermé et enserre un espace annulaire (R),
- dans l'espace annulaire (R), il y a un élément de soutien (30) légèrement plus petit que l'espace annulaire (R),
- l'élément de soutien (30) est relié au deuxième disque d'extrémité (12), et
- l'élément de soutien (30) dispose d'une sécurité anti-rotation (21) qui s'engage dans un logement (P) sur le premier disque d'extrémité (11),
**caractérisé en ce que** l'élément de soutien (30) dispose d'une sécurité axiale (25) en liaison active avec le premier disque d'extrémité (11).

2. Elément filtrant (10) selon la revendication 1, **caractérisé en ce que** la sécurité axiale (25) est une liaison à encliquetage reliant l'élément de soutien (30) et le premier disque d'extrémité (11).

3. Elément filtrant (10) selon l'une quelconque des revendications précédentes, **caractérisé en ce que** l'élément de soutien (30) comporte deux pièces reliées entre elles de manière indétachable, la sécurité axiale (25) étant disposée sur l'une de ces pièces.

4. Elément filtrant (10) selon l'une quelconque des revendications précédentes, **caractérisé en ce que** l'élément de soutien (30) dispose d'une zone étanche aux liquides (16) et d'une zone perméable aux liquides (17), la zone étanche aux liquides (16) étant séparée hermétiquement de la zone perméable aux liquides (17).

5. Elément filtrant (10) selon l'une quelconque des revendications précédentes, **caractérisé en ce que** la zone perméable aux liquides (17) est disposée, du moins en partie, dans la sécurité anti-rotation (21).

6. Elément filtrant (10) selon l'une quelconque des revendications précédentes, **caractérisé en ce que** le premier disque d'extrémité (11) a une surface périphérique profilée (26).

7. Elément filtrant (10) selon l'une quelconque des revendications précédentes, **caractérisé en ce qu'**au moins une pièce de l'élément de soutien (30) est aménagée contre le deuxième disque d'extrémité (12).

8. Filtre à liquide pour fluides pouvant geler, en particulier pour des solutions urée/eau, présentant un élément filtrant (10) et un boîtier (37) avec une entrée (42) et une sortie (43), le boîtier (37) disposant d'un pot (38) et d'un couvercle (39), le pot (38) disposant d'un volume intérieur (V) légèrement plus grand que l'élément filtrant (10) et l'élément filtrant (10) étant introduit dans le boîtier (37) de manière à ce que l'entrée (42) soit séparée hermétiquement de la sortie (43), **caractérisé en ce que** l'élément filtrant (10) est configuré conformément à l'une quelconque des revendications 1 à 7.

9. Procédé de fabrication d'un élément filtrant selon les revendications 1 à 7, présentant au moins les étapes suivantes :
- liaison du deuxième disque d'extrémité (12) au milieu filtrant (13),
- immobilisation de la sécurité anti-rotation (21) de l'élément de soutien (30) dans le premier disque d'extrémité (11), et
- liaison du premier disque d'extrémité (11) au milieu filtrant (13),
**caractérisé en ce que** la sécurité axiale (25) de l'élément de soutien (30) est reliée au premier disque d'extrémité (11).
